(19) Europäisches Patentamt
European Patent Office
Office européen des brevets

(11) **EP 2 810 382 B1**

(12) **EUROPEAN PATENT SPECIFICATION**

(45) Date of publication and mention
of the grant of the patent:
**10.08.2016 Bulletin 2016/32**

(51) Int Cl.:
***H04B 7/06*** (2006.01)

(21) Application number: **13712724.7**

(86) International application number:
**PCT/EP2013/055405**

(22) Date of filing: **15.03.2013**

(87) International publication number:
**WO 2013/135872 (19.09.2013 Gazette 2013/38)**

(54) **METHOD OF SELECTING ANTENNA IN WIRELESS COMMUNICATION SYSTEM AND WIRELESS COMMUNICATION DEVICE**

VERFAHREN ZUR ANTENNENAUSWAHL IN EINEM DRAHTLOSEN KOMMUNIKATIONSSYSTEM UND DRAHTLOSE KOMMUNIKATIONSVORRICHTUNG

PROCÉDÉ POUR LA SÉLECTION D'UNE ANTENNE DANS UN SYSTÈME DE COMMUNICATION SANS FIL, ET DISPOSITIF DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2012 CN 201210068761**

(43) Date of publication of application:
**10.12.2014 Bulletin 2014/50**

(73) Proprietor: **Siemens Aktiengesellschaft 80333 München (DE)**

(72) Inventors:
• **LAMPE, Mattias**
 **38304 Wolfenbuettel (DE)**
• **FENG, Da Wei**
 **Beijing 100102 (CN)**
• **WANG, Li**
 **Beijing 100102 (CN)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(56) References cited:
**US-A1- 2005 185 707    US-A1- 2007 275 664**
**US-A1- 2009 202 009    US-A1- 2011 143 692**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical field

The present invention relates to wireless communication technology, in particular to a method for selecting an antenna in a wireless communication system and a wireless communication device.

Background art

MIMO (multiple input multiple output) technology uses M spatially independent transmitting antennas for simultaneous, parallel transmission of M data streams, and is capable of achieving higher data rates than previous single-antenna systems. By subjecting the signals received by N (>= M) spatially independent receiving antennas at the receiving end to combined processing, the data of each data stream can be reconstructed.

Such a method necessitates the integration of at least M complete wireless transceiving links in a wireless communication device, including a switch, power amplifier, low-noise amplifier (LNA), mixer, filter and up/down converter, etc.

However, there are also many application scenarios in which MIMO mode is used not to improve throughput but to make data links more reliable. In these cases, a wireless communication device sends just one data stream at a time. The multiple wireless transceiving links at the receiving end, on the other hand, may still be used to realize a diversity reception mechanism (such as maximal ratio combining based on one carrier at a time). This one data stream may be transmitted by one wireless transceiving link and an antenna connected thereto, but may also be transmitted using more than one of the existing M wireless transceiving links simultaneously, to achieve a more robust, more efficient communication result.

According to a conventional scheme for selecting a wireless transceiving link and antenna, device A selects the wireless transceiving link for which a data packet previously received from device B has the highest signal strength, and the corresponding antenna, as the transmitting link and antenna to be used when transmitting a signal to device B. Supposing that the wireless channel has reciprocity, and that the transmission power of device A is not dependent upon the choice of wireless transceiving link, the selection of the above wireless transceiving link and antenna will maximize the strength of the signal received by device B.

However, in wireless systems, the maximum permissible transmitting power of a device is related to such factors as the maximum equivalent isotropically radiated power (EIRP) permitted by a country's regulatory framework, antenna gain and hardware capability. If different wireless transceiving links and antennas thereof have different parameters, the maximum permissible transmission power of the device will be determined by the selected wireless transceiving link and the antenna thereof. Therefore, the basis for the above method (summarized as "the best receiving antenna is also the best transmitting antenna"), which "supposes that the transmission power of device A is not dependent upon the choice of wireless transceiving link", is in many cases untenable. Thus the antenna selected by the above method is not necessarily the antenna capable of maximizing the strength of the signal received by the receiving device.

Document US 2005/185707 A1 discloses an antenna selection method based on a signal quality metric in a transceiver having multiple antennas.

Content of the invention

The present invention provides a method for selecting an antenna in a wireless communication system and a device, wherein differences between various antennas and transceiving links thereof are taken into account during antenna selection, so that the selection of the best transmitting antenna is more accurate.

According to the method for selecting an antenna in a wireless communication system in one embodiment of the present invention, a first device in the wireless communication system has at least two wireless transceiving links, each wireless transceiving link has an antenna, and the antenna selection method mainly comprises:

obtaining a first reception quality value of each antenna and/or at least one antenna combination for a signal transmitted by a second device; and
on the basis of a maximum permissible transmission power and the first reception quality value of said each antenna and/or the antenna combination, estimating a second reception quality value of the second device for a signal transmitted by said each antenna and/or the antenna combination;
on the basis of the second reception quality value, determining an antenna or antenna combination as a transmitting antenna to be used when transmitting a signal to the second device.

An embodiment of the present invention also provides a wireless communication device which has at least two wireless transceiving links, each wireless transceiving link having an antenna, the device mainly comprising:

> an information acquisition module, for obtaining a first reception quality value of each antenna and/or at least one antenna combination for a signal transmitted by a second device, and on the basis of a maximum permissible transmission power and the first reception quality value of said each antenna and/or the antenna combination, estimating a second reception quality value of the second device for a signal transmitted by said each antenna and/or the antenna combination; and
> an antenna selection module, for determining, on the basis of the second reception quality value, an antenna or antenna combination as a transmitting antenna to be used when transmitting a signal to the second device.

It can be seen from the above technical solution that by taking into account differences between various antennas and transceiving links thereof, the method for selecting an antenna in a wireless communication system and the device in the embodiments of the present invention are no longer dependent upon the quality of received signals alone, so that the selection of the best transmitting antenna is more accurate.

Description of the accompanying drawings

Fig. 1 is a main flow chart of the antenna selection method in an embodiment of the present invention.

Fig. 2 is a flow chart of the antenna selection method in an embodiment of the present invention.

Fig. 3 is a flow chart of the antenna selection method in an embodiment of the present invention.

Fig. 4 is a flow chart of the antenna selection method in an embodiment of the present invention.

Fig. 5 is a schematic diagram of the structure of the wireless communication device in an embodiment of the present invention.

Fig. 6 is a schematic diagram showing the principles of reception quality measurement for a communication peer signal in an embodiment of the present invention.

Fig. 7 is a schematic diagram showing the principles of reception quality estimation for a communication peer in an embodiment of the present invention.

Particular embodiments

The antenna selection method provided by the embodiments of the present invention is mainly applied to a wireless communication device in a wireless communication system, and used to carry out wireless communication between the wireless communication device and another wireless communication device. The wireless communication device may be a network side device in a wireless communication system, such as an access point (AP), etc., but may also be a user terminal (UE). The wireless communication device has at least two wireless transceiving links, each wireless transceiving link having an antenna. The communication peer thereof may be a single-antenna wireless communication device, but may also be a device similar to the wireless communication device and having multiple wireless transceiving links.

The wireless transceiving link herein mainly comprises an antenna and a structure for processing the transmitted signals and received signals of the antenna, for example a switch, power amplifier, low-noise amplifier (LNA), mixer, filter or up/down converter, etc.

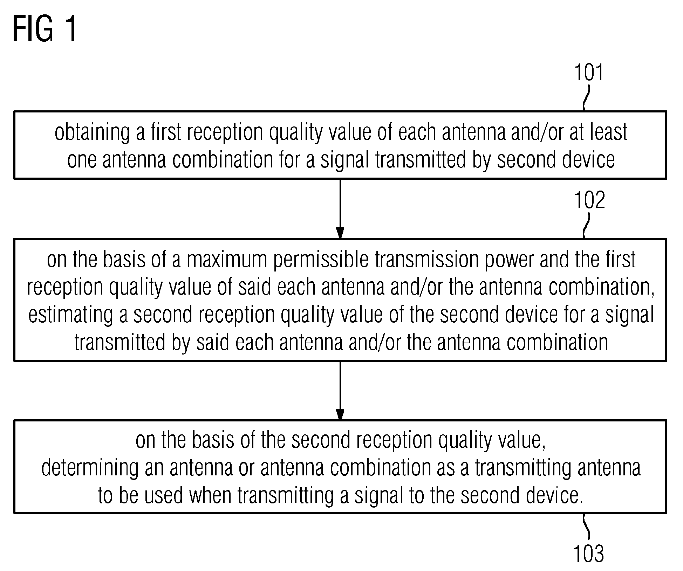

Fig. 1 is a main flow chart of the antenna selection method in an embodiment of the present invention. As Fig. 1 shows, the antenna selection method mainly comprises:

> step 101: obtaining a first reception quality value of each antenna and/or at least one antenna combination for a signal transmitted by a second device;

> step 102: on the basis of a maximum permissible transmission power and the first reception quality value of said each antenna and/or the antenna combination, estimating a second reception quality value of the second device for a signal transmitted by said each antenna and/or the antenna combination;

step 103: on the basis of the second reception quality value, determining an antenna or antenna combination as a transmitting antenna to be used when transmitting a signal to the second device.

A few specific examples are given below to help those skilled in the art to understand the above solution.

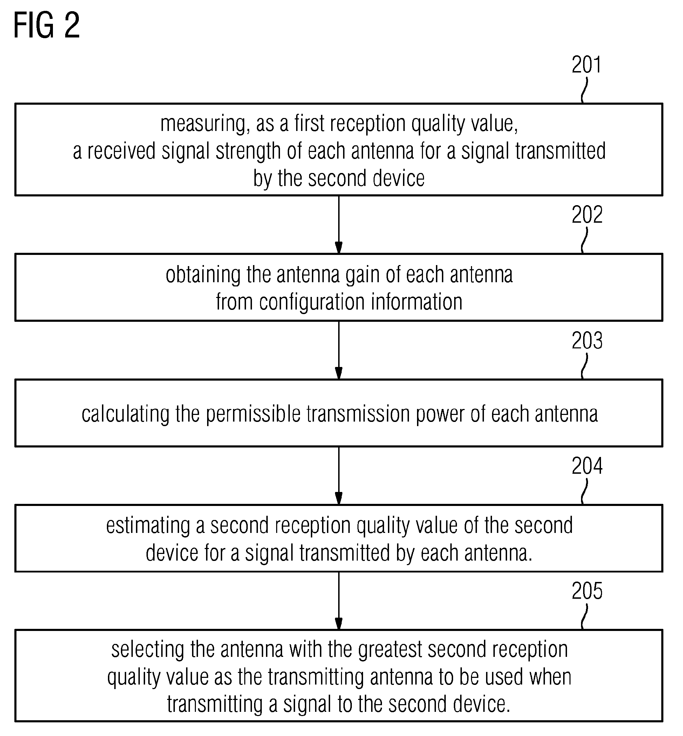

Fig. 2 is a flow chart of the antenna selection method in an embodiment of the present invention.

Step 201: the first device measures, as a first reception quality value, a received signal strength of each antenna for a signal transmitted by the second device.

In this embodiment, the first device uses the received signal strength of each antenna as the first reception quality value. In some embodiments, the first device may also measure other parameters of a signal received by said each antenna from the second device, for example signal-to-noise ratio, received signal strength indicator (RSSI), etc., as the first reception quality value of said each antenna. In some embodiments, a measured parameter may be processed in accordance with requirements before being taken as the first reception quality value, for example by finding the mean or maximum value of the parameter over a period of time, etc.

Step 202: the first device obtains the antenna gain of each antenna from configuration information.

The maximum permissible transmission power of an antenna may be calculated on the basis of such parameters as antenna gain, the link loss and/or connector loss of the wireless transceiving link of the antenna and connecting lines thereof, the maximum equivalent isotropically radiated power (EIRP) permitted by administrative regulations of the country concerned, and the maximum transmission power the hardware of each antenna is capable of providing. The antenna gain, link loss and connector loss may be obtained by the wireless communication device from configuration information inputted by a user or a factory configuration parameter set of the device itself.

Step 203: the first device calculates the maximum permissible transmission power of each antenna.

Specifically, the maximum transmission power permitted by country regulations may be obtained by subtracting the antenna gain from the stipulated maximum EIRP, or by subtracting the antenna gain from the stipulated maximum EIRP and then adding the link loss and/or connector loss. In addition, each antenna also has a maximum transmission power permitted by the hardware. The smaller of the above two maximum transmission powers of an antenna is the maximum permissible transmission power of that antenna.

Step 204: the first device estimates a second reception quality value of the second device for a signal transmitted by each antenna.

In this step, regarding the method for estimating the second reception quality value, it can be determined as required or according to the parameter chosen as the first reception quality value. For example, the product of the maximum permissible transmission power of an antenna and the antenna gain of the antenna may be used as the second reception quality value, etc.

For example, device A has three wireless transceiving links and antennas. For the signal received from device B, we have:

$$RSSI_{A,i} = G_{A,i} \cdot a_i \cdot P_B \cdot G_B \qquad (1)$$

wherein $RSSI_{A,i}$ represents the RSSI value of the ith wireless transceiving link and antenna thereof (hereinafter abbreviated as antenna i) of device A, $G_{A,i}$ represents the antenna gain of antenna i, $a_i$ represents the channel attenuation to which the received signal of antenna i is subject, $P_B$ represents the transmission power of device B, and $G_B$ represents the antenna gain of the transmitting antenna of device B.

For the signal received by device B from each antenna of device A, we have:

$$RSSI_{B,i} = P_{A,i} \cdot G_{A,i} \cdot a_i \cdot G_B \qquad (2)$$

wherein $RSSI_{B,i}$ is the RSSI value of the signal received by device B from antenna i of device A, and $P_{A,i}$ represents the transmission power of antenna i of device A.

It can be seen that $P_B$ and $G_B$ are antenna parameters of device B, and are the same as far as each antenna of device A is concerned. In other words, $RSSI_{A,i}$ measured by device A is directly proportional to $G_{A,i} \, a_i$, while $RSSI_{B,i}$ is directly proportional to $P_{A,i} \cdot G_{A,i} \cdot a$. Therefore when device A needs to use estimation to obtain $RSSI_{B,i}$ of each antenna to carry out transverse comparison of antennas, it need only obtain the transmission power of each antenna, and could then use the previously measured $RSSI_{A,i}$ and the transmission power to obtain the relative $RSSI_{B,i}$ of each antenna, with no need to learn the absolute values of the various parameters in the formula.

It must be remembered that the link loss and connector loss in the wireless transceiving link and its connection with the antenna have been ignored in the above formulas. If it is desired to make the above calculation more accurate,

$G_{A,i}$ can be replaced with the overall gain of the wireless transceiving link and antenna thereof obtained by taking into account $G_{A,i}$ and the link loss and connector loss together, for example the difference between $G_{A,i}$ and the link loss and connector loss.

In this way, the wireless communication device also takes into account differences between various wireless transceiving links and antennas, thereby making antenna selection more optimal.

Step 205: the first device selects the antenna with the greatest second reception quality value as the transmitting antenna to be used when transmitting a signal to the second device.

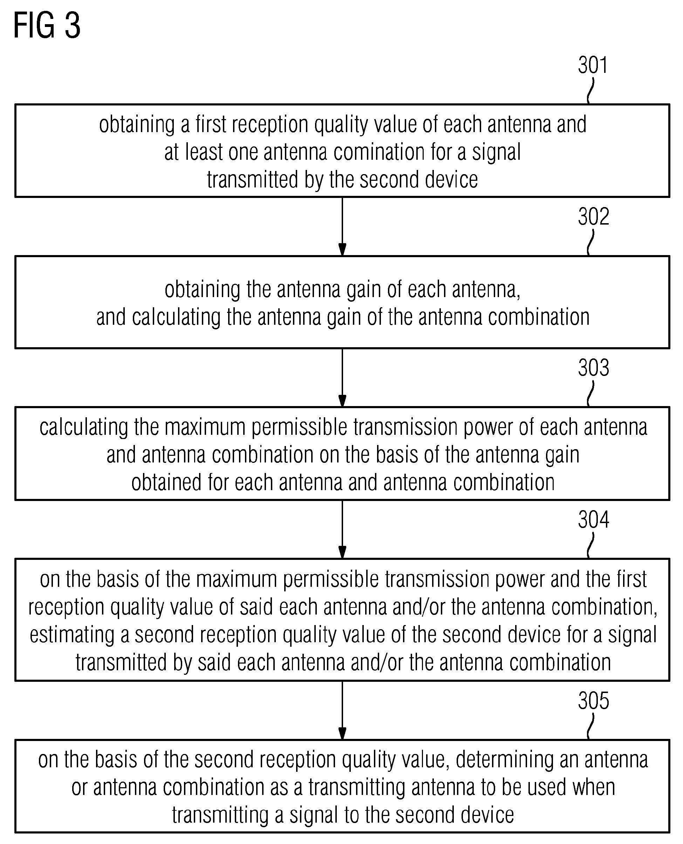

Fig. 3 is a flow chart of the antenna selection method in an embodiment of the present invention.

Step 301: the first device obtains a first reception quality value of each antenna and at least one antenna combination for a signal transmitted by the second device.

The above antenna combination may be at least one antenna combination selected by the first device from preset alternative antenna combinations. The preset alternative antenna combinations may be obtained on the basis of such information as the type, performance and arrangement of each antenna. For example, when the wireless communication device has three antennas, of which antenna 1 is an omnidirectional antenna while antenna 2 and antenna 3 cover two opposite directions, respectively (for instance antenna 2 faces towards the front while antenna 3 faces towards the rear), antennas 2 and 3 cannot possibly cover a given communication peer device simultaneously, and so two antenna combinations can be obtained as alternative antenna combinations: antenna 1 and antenna 2, and antenna 1 and antenna 3.

Alternatively, the antenna combination may be at least one antenna combination determined by the wireless communication device on the basis of the first reception quality values of the various antennas. For example, the wireless communication device may select a preset number of antennas from the various antennas according to the order of the first reception quality values from high to low, or select antennas for which the first reception quality value is greater than a preset threshold from the at least two antennas; and use the selected antennas to obtain the at least one antenna combination, for instance use the antennas with the largest first reception quality value and second-largest first reception quality value as the antenna combination.

Step 302: the first device obtains the antenna gain of each antenna, and calculates the antenna gain of the antenna combination.

The antenna gain of the antenna combination may be calculated by the first device on the basis of the antenna gain of each antenna in the antenna combination and/or the link loss and/or connector loss of each wireless transceiving link and antenna thereof. Since the gain of an antenna combination is related to the manner of arrangement, antenna type and performance parameters of each antenna in the combination, the wireless communication device may obtain the required antenna arrangement information and specific antenna parameters, etc. to calculate the gain of the antenna combination. Alternatively, the wireless communication device may calculate the maximum value of the antenna gain of the antenna combination on the basis of the gain of each antenna in the antenna combination.

Step 303: the first device calculates the maximum permissible transmission power of each antenna and antenna combination on the basis of the antenna gain obtained for each antenna and antenna combination.

The calculation in this step is similar to the calculation of the maximum permissible transmission power of a single antenna above, and is not repeated here superfluously.

Step 304: on the basis of the maximum permissible transmission power and the first reception quality value of said each antenna and/or the antenna combination, a second reception quality value of the second device for a signal transmitted by said each antenna and/or the antenna combination is estimated.

Step 305: on the basis of the second reception quality value, the first device determines an antenna or antenna combination as a transmitting antenna to be used when transmitting a signal to the second device.

When selecting a transmitting antenna for the second device in this step, the specific selection strategy may be determined according to actual requirements.

For example, the antenna or antenna combination with the greatest second reception quality value may be selected as the transmitting antenna.

As another example, when an antenna combination has the greatest second reception quality value, if the difference between said greatest second reception quality value and the greatest second reception quality value of the single antennas forming the antenna combination is less than a preset second threshold, the single antenna with the greatest second reception quality value in the antenna combination is selected as the transmitting antenna; if the difference between said greatest second reception quality value and the greatest second reception quality value of the single antennas forming the antenna combination or the alternative antenna combination is greater than a preset third threshold, the single antenna with the greatest second reception quality value in the antenna combination is selected as the transmitting antenna.

As yet another example, when the second reception quality values of the various antennas are arranged in order from high to low, if the greatest difference value between the first N second reception quality values is less than a preset first threshold, when the equivalent isotropically radiated power (EIRP) of the maximum permissible transmission power of the antenna with the greatest second reception quality value is equal to the maximum legal EIRP, the antenna with the greatest second reception quality value is selected as the transmitting antenna; when the maximum permissible transmission power of the antenna with the greatest second reception quality value is the maximum transmission power permitted by the hardware, a combination of at least two of the N antennas with the first N second reception quality values is selected as an alternative antenna combination, a second reception quality value of the alternative antenna combination is calculated, and on the basis of the second reception quality value of the alternative antenna combination and the second reception quality values of the various antennas, an antenna or antenna combination is selected as the transmitting antenna, wherein N is an integer. Here, the selection of an antenna or antenna combination as the transmitting antenna on the basis of the second reception quality value of the alternative antenna combination and the second reception quality values of the various antennas may be done by the method of one of the examples above, or by another method, for instance a selection method determined on the basis of such factors as priority or transmission load sharing.

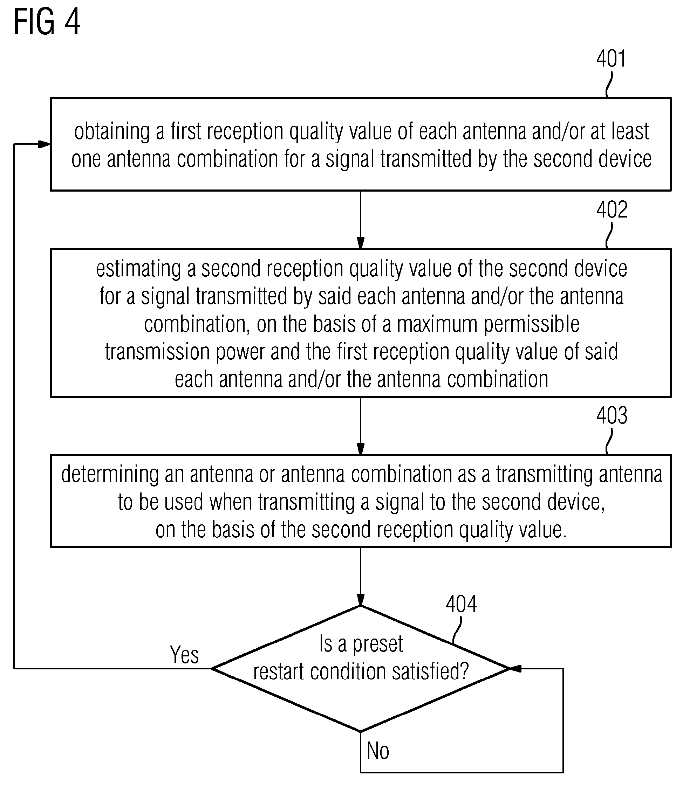

Since a wireless communication device in a wireless communication system may be mobile, the conditions of a wireless communication channel are also continuously changing. According to one embodiment, the wireless communication device may start the above antenna selection method again after a period of time, to re-determine the transmitting antenna to be used when transmitting a signal to the second device. Fig. 4 is a flow chart of the antenna selection method in an embodiment of the present invention.

Step 401: the first device obtains a first reception quality value of each antenna and/or at least one antenna combination for a signal transmitted by the second device.

Step 402: the first device estimates a second reception quality value of the second device for a signal transmitted by said each antenna and/or the antenna combination, on the basis of a maximum permissible transmission power and the first reception quality value of said each antenna and/or the antenna combination.

Step 403: the first device determines an antenna or antenna combination as a transmitting antenna to be used when transmitting a signal to the second device, on the basis of the second reception quality value.

Step 404: a judgment is made as to whether a preset restart condition is satisfied; if it is not satisfied, wait; if it is satisfied, return to step 401.

The first device may perform antenna selection afresh when the preset condition is satisfied. The preset condition may be that a preset length of time has elapsed since the last time the transmitting antenna was determined, or a threshold set for a reception parameter of a signal transmitted by the second device, etc. For example, the first device may start a timer after selecting the transmitting antenna in step 403, and upon receiving a timer time-out event, return to step 401 to restart the above antenna selection process. As another example, a reception quality threshold for a signal transmitted by the second device may be preset in the first device, for instance a minimum signal strength value, etc., and when it is judged that the reception quality for a signal of the second device has exceeded the reception quality threshold, step 401 is returned to, and the above antenna selection process restarted. These are just a few examples; in practice, other mechanisms may be employed to trigger the antenna reselection process.

According to one embodiment, the wireless communication device may measure an effective load packet and/or acknowledgement packet received from the second device in order to obtain the first reception quality value. When it is necessary to perform antenna selection, the wireless communication device may also send an empty packet to the second device, and measure an acknowledgement packet fed back by the second device to obtain the first reception quality value.

In each of the above processes, not all of the steps are necessary; some steps may be omitted as required. Moreover, the above processes are merely illustrative, and the present invention does not define the order in which the various steps are to be executed; the order in which the various steps are executed may be adjusted as required. Furthermore, the above processes only describe steps which are relevant to the present solution; the actual processes may include other steps.

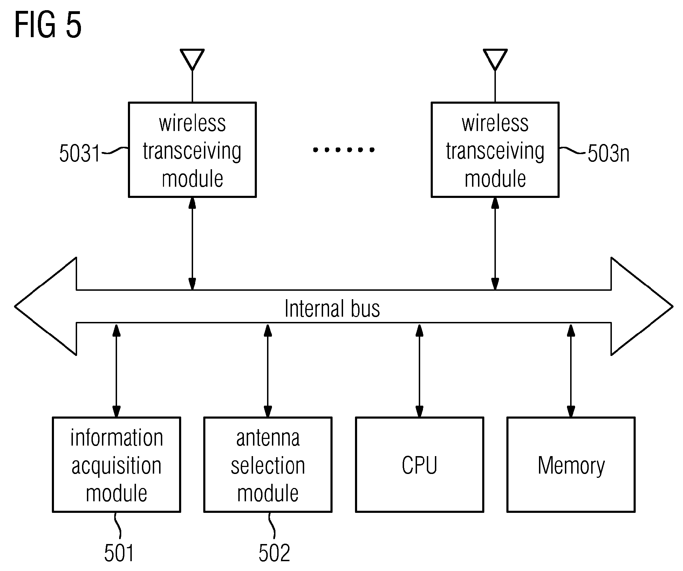

Fig. 5 is a schematic diagram of the structure of the wireless communication device in an embodiment of the present invention. As the example in Fig. 5 shows, the device mainly comprises: an information acquisition module 501, an antenna selection module 502 and wireless transceiving links 5031 to 503n, wherein n is an integer greater than 1. Each wireless transceiving link has an antenna.

The information acquisition module 501 may be used to perform operations related to steps 101, 102, 201 to 204, 301 - 304 and 401 to 402 above. The antenna selection module 502 may be used to perform operations related to steps 103, 205, 305 and 403 above.

Specifically, the information acquisition module 501 may be used to obtain a first reception quality value of each antenna and/or at least one antenna combination for a signal transmitted by a second device, and on the basis of a maximum permissible transmission power and the first reception quality value of said each antenna and/or the antenna combination, to estimate a second reception quality value of the second device for a signal transmitted by said each antenna and/or the antenna combination;

the antenna selection module 502 may be used to determine, on the basis of the second reception quality value, an antenna or antenna combination as a transmitting antenna to be used when transmitting a signal to the second device.

According to one embodiment, the information acquisition module 501 may measure the signal-to-noise ratio or signal strength of a signal received by said each antenna from the second device, and obtain a first reception quality value of said each antenna on the basis of the signal strength or signal-to-noise ratio.

According to one embodiment, the information acquisition module 501 may also use the antenna gain of said each antenna to calculate the maximum permissible transmission power, or use the antenna gain of said each antenna and the link loss and/or connector loss of said each wireless transceiving link and antenna thereof to calculate the maximum permissible transmission power of said each antenna.

According to one embodiment, the information acquisition module 501 may also calculate the maximum value of antenna gain of the antenna combination on the basis of the antenna gain of said each antenna, and calculate the maximum permissible transmission power of the antenna combination on the basis of the maximum value of antenna gain of the antenna combination. According to one embodiment, the information acquisition module 501 may obtain the antenna gain, link loss and connector loss from configuration information inputted by a user or a factory configuration parameter set of the first device itself.

According to one embodiment, the information acquisition module 501 may select the at least one antenna combination from preset alternative antenna combinations, or determine the at least one antenna combination on the basis of the first reception quality value of said each antenna.

According to one embodiment, the information acquisition module 501 may select a preset number of antennas from the various antennas according to the order of the first reception quality values from high to low, or select antennas for which the first reception quality value is greater than a preset threshold from the at least two antennas; and use the selected antennas to obtain the at least one antenna combination.

According to one embodiment, the antenna selection module 502 may perform one or more of the following:

select the antenna or antenna combination with the greatest second reception quality value as the transmitting antenna;

and/or,

when the second reception quality values of the various antennas are arranged in order from high to low, if the greatest difference value between the first N second reception quality values is less than a preset first threshold, when the equivalent isotropically radiated power (EIRP) of the maximum permissible transmission power of the antenna with the greatest second reception quality value is equal to the maximum legal EIRP, the antenna with the greatest second reception quality value is selected as the transmitting antenna; when the maximum permissible transmission power of the antenna with the greatest second reception quality value is the maximum transmission power permitted by the hardware, a combination of at least two of the N antennas with the first N second reception quality values is selected as an alternative antenna combination, a second reception quality value of the alternative antenna combination is calculated, and on the basis of the second reception quality value of the alternative antenna combination and the second reception quality values of the various antennas, an antenna or antenna combination is selected as the transmitting antenna, wherein N is an integer;

and/or,

when the antenna combination or the alternative antenna combination has the greatest second reception quality value, if the difference between said greatest second reception quality value and the greatest second reception quality value of the single antennas forming the antenna combination or the alternative antenna combination is less than a preset second threshold, the single antenna with the greatest second reception quality value in the antenna combination is selected as the transmitting antenna; if the difference between said greatest second reception quality value and the greatest second reception quality value of the single antennas forming the antenna combination or the alternative antenna combination is greater than a preset third threshold, the single antenna with the greatest second reception quality value in the antenna combination is selected as the transmitting antenna.

According to one embodiment, the information acquisition module 501 may measure an effective load packet and/or acknowledgement packet received from the second device in order to obtain the first reception quality value.

According to one embodiment, the information acquisition module 501 may send an empty packet to the second device, and measure an acknowledgement packet fed back by the second device to obtain the first reception quality value.

According to one embodiment, when a preset condition is satisfied or a preset length of time has elapsed since the last time the transmitting antenna was determined, the antenna selection module 502 may start the antenna selection method to re-determine the transmitting antenna to be used when transmitting a signal to the second device.

Furthermore, the device may also include other modules, such as a processor CPU, a memory, or an internal bus, etc. In fact, the functions of the various modules above may require the assistance of these modules to be accomplished. For example, the processing function of a CPU is utilized; it is necessary to read configuration information from a memory, and write intermediate results of calculations therein; and an internal bus is used to perform information exchange with the various modules.

In the above descriptions, the various modules of the device are partitioned according to function, for ease of understanding. In practice, the above modules may be realized by the same physical module, or the same module may be split up and realized by multiple physical modules. The above modules may be realized by modules already present in existing wireless communication devices, or by newly added modules.

For ease of understanding, a specific example is given below for illustration.

In this embodiment, the above solution is applied to a wireless local area network (WLAN). Device A is a WLAN device with M wireless transceiving links. Device A can provide the RSSI values of all the wireless transceiving links, and can also provide one combined RSSI value for multiple links to describe the signal strength of received signals of these multiple links after merging.

The WLAN device knows the gain of each antenna, and the cable/connector losses of each wireless transceiving links (including antennas). In general, this information is supplied by a user during system configuration, but in certain situations, for instance when the device does not allow the user to change the antennas, it is possible that some of the information comes from a factory configuration parameter set.

Based on the information known about the gain of each antenna, in combination with the power limitation imposed by state regulations and the maximum possible output power of the device hardware, which are already known, device A can calculate the maximum permissible transmission power of each wireless transceiving link (abbreviated as link below).

When single-antenna transmission is used, device A can determine the single transmitting antenna which should be used on the basis of the maximum possible transmission power of each link and the RSSI value of a data packet previously received from the receiving device of the data packet to be sent, in order to maximize the received signal strength. When antenna combinations need to be taken into account, device A can store the order of antennas, i.e. the one with the best reception quality, the one with the second best reception quality, the third best, ..., for determining the antenna combinations that can be considered for use in subsequent steps.

Regarding antenna combinations, device A can calculate the combined antenna gain in the worst case scenario when multiple transmitting antennas are used simultaneously, and in turn calculate the maximum transmission power permitted when transmitting with multiple antennas. Here, identical calculations can be performed for different transmitting antenna combinations.

Based on the above maximum transmission power, and comparison of a combined RSSI value for multiple links and an RSSI value for a single link obtained on the basis of previously received data packets, a decision is made as to whether to use a combination of multiple transmitting antennas, or to just select the single best transmitting antenna.

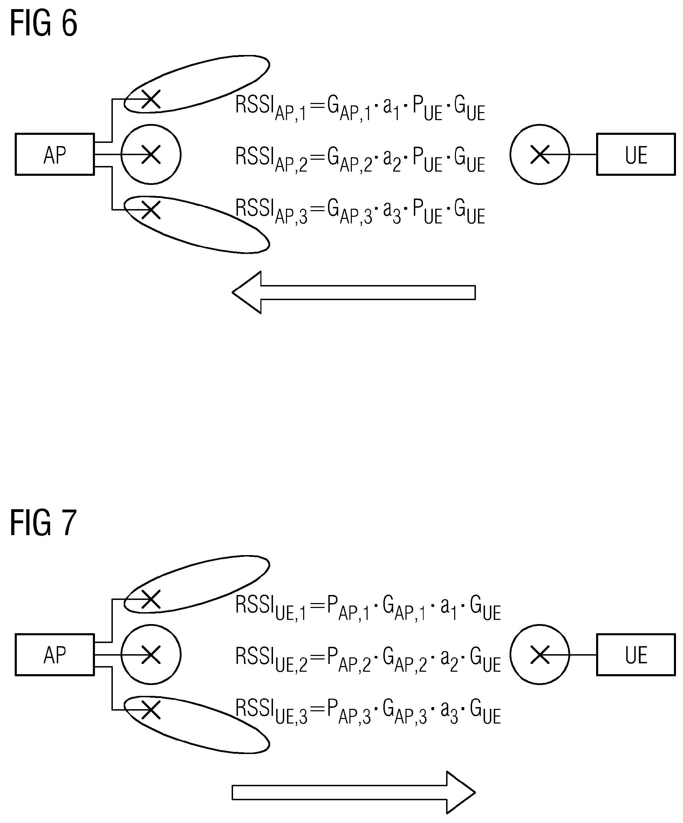

For example, Fig. 6 is a schematic diagram showing the principles of the reception quality measurement process in an embodiment of the present invention. As Fig. 6 shows, one access point (AP) is equipped with 3 RF links and antennas, while one client (UE) is equipped with one RF link/antenna. To make the description simple, a single-antenna client is used as the above communication peer, but in practice, the communication peer may also be a device with multiple RF links and antennas.

Assume that the cable loss, etc., is already included in the antenna gain, and is known to the AP.

The AP measures RSSI for all the RF links simultaneously. As Fig. 6 shows, $RSSI_{AP,i} = G_{AP,i} \cdot a_i \cdot P_{UE} \cdot G_{UE}$ . The RSSI of each link depends upon the channel attenuation $a_i$ and antenna gain $G_{AP,i}$ of each link, and also upon certain parameters of the transmitting station UE; these parameters are the same for all links. In Fig. 6, factors related to the links are merged as a "link quality" value.

Fig. 7 is a schematic diagram showing the principles of reception quality estimation for a communication peer in an embodiment of the present invention. Fig. 7 shows how a measured RSSI value is converted to an RSSI estimation value $RSSI_{UE,i} = P_{AP,i} \cdot G_{AP,i} \cdot a_i \cdot G_{UE}$ for the UE for the transmitted signal of link i.

In the formula, $P_{AP,i} = \min\{P_{reg} - G_{AP,i}, P_{AP,max}\}$ where $P_{reg}$ represents the EIRP transmission power restriction imposed by state regulations, while $P_{AP,max}$ represents the maximum possible transmission power that the hardware is capable of providing. As can be seen, the RSSI estimation value also depends upon the link quality and transmission power of each link, and the gain of the receiving antenna of the UE (which is independent of the links).

According to Fig. 7, the link with the best RSSI estimation value can serve as the first choice of transmitting antenna.

A practical example is given below:

Here, $P_{UE} \cdot G_{UE}$ = 20 dBm ; $P_{reg}$ = 20 dBm.

|  | Antenna **1** | Antenna **2** | Antenna **3** |
|---|---|---|---|
| $G_{AP}$ | **6** dBi | **3** dBi | **10** dBi |
| $a$ | **-98** dB | **-96** dB | **-100** dB |
| $RSSI_{AP}$ | **-72** dBm | **-73** dBm | **-70** dBm |
| $P_{AP}$ | **14** dBm | **17** dBm | **10** dBm |
| $RSSI_{UE}$ | **-78** dBm | **-76** dBm | **-80** dBm |

It can be seen from the calculation results above that antenna 2 has the greatest $RSSI_{UE}$, and so antenna 2 can be considered for use as the transmitting antenna for the client.

A situation where the transmission powers of all the links are limited by the hardware is known as "hardware limitation".

A situation where EIRP restrictions limit the transmission power of one or more of the links is known as "EIRP restriction".

If there is a possibility that multiple transmitting antennas will be used simultaneously, a decision must be made as to whether to use only the best antenna, or to use an antenna combination.

If multiple antennas are used simultaneously, superposition of transmitted signals will give rise to a radiation pattern which is markedly different from a single pattern. Unless the specific arrangement of antennas and cables has taken account of this situation accurately, such an effect is called "unintentional beamforming". In use, a combination of transmitting antennas resembles a single antenna with a different (and perhaps higher) gain. For example, the result of simultaneous transmission by two omnidirectional antennas with a gain of 3 dBi is equivalent to that of using one antenna with a total power of 6 dBi for transmission. Since the EIRP restriction imposed by state regulations cannot be violated, the effect of unintentional beamforming must be taken into account when determining the permissible transmission power of a transmitting antenna combination.

A situation where the transmission power of an antenna combination is limited by the EIRP restriction is known as "EIRP restriction"; otherwise, it is known as "hardware limitation".

When judging whether it is better to use a combination of transmitting antennas or use the best transmitting antenna, or when making a selection from multiple antenna combinations, one or more of the following standards may be used as a basis:

1. The divergence between the merged RSSI value and the maximum RSSI estimation value of each link. If the merged RSSI estimation value is significantly greater, it is feasible to use a combination of transmitting antennas.

2. The divergence between RSSI estimation values of each link in an antenna combination. One possible way of measuring the divergence is to calculate the ratio of the highest to the lowest RSSI estimation values, or the variance, or another value capable of reflecting the degree of similarity between these RSSI estimation values.

3. Selection according to EIRP restriction or hardware limitation. For example, if the RSSI estimation values of all the links are similar, then the use of a single transmitting antenna will generally be considered first in the case of EIRP restriction, whereas multi-antenna transmission may be considered in the case of hardware limitation. This is because in the case of EIRP restriction, the antenna itself is capable of a higher transmission power, and is only restricted by state regulations; a combination of multiple antennas will still be restricted by state regulations, hence a single antenna is used for transmission. In the case of hardware limitation, a single antenna lacks the ability to provide a higher transmission power, and so the use of an antenna combination may be considered to increase transmission power, in order to improve the reception quality at the receiving end.

4. Antenna gain, and the situation regarding antenna alignment (overlapping of antenna lobes), i.e. whether there is overlapping, etc., of antenna lobes.

For instance, when there is no overlapping of antenna lobes, the use of an antenna combination is in general not considered.

Suppose we have an open system in an outdoor environment, wherein an AP is equipped with three high-gain antennas. These three high-gain antennas are installed in such a way that their coverage areas overlap very little, or not at all. Obviously, in such a situation, transmission by all three antennas is not feasible, and even transmission by two antennas is only meaningful for clients on the boundary between the coverage areas of these two antennas.

As another example, an AP equipped with three omnidirectional antennas is positioned in an indoor environment.

In such a situation, a decision must be made as to whether to give precedence to the use of a single antenna or to use all three antennas in this multi-path environment, because the unintentional beamforming which arises when three antennas are used simultaneously may be able to generate favorable effects. If the RSSI values measured by the AP from each link vary considerably, and the merged RSSI and best single-link RSSI are very similar, then a single antenna will for the most part make a bigger contribution to reception, and there is not very much frequency diversity among multiple RF links. It is not likely that the use of all links for transmission will be more advantageous than using the best antenna. However, if the merged RSSI of all the antennas is markedly higher than the best single-link RSSI, then a better result may be attainable by using all the antennas for simultaneous transmission.

The present invention also provides a machine-readable storage medium, which stores a command for making a machine perform the image processing method in the ultrasound system described herein. Specifically, a system or device equipped with a storage medium may be provided, a software program code for realizing the function of any one of the above embodiments being stored on the storage medium, and a computer (or CPU or MPU) of the system or device is made to read and execute the program code stored in the storage medium.

In such a situation, the program code read from the storage medium is itself capable of realizing the function of any one of the above embodiments, hence the program code and the storage medium storing the program code form part of the present invention.

Embodiments of the storage medium used to provide a program code include floppy disk, hard disk, magneto-optical disk, optical disk (such as CD-ROM, CD-R, CD-RW, DVD-ROM, DVD-RAM, DVD-RW, DVD+RW), magnetic tape, non-volatile storage card and ROM. Optionally, a program code may be downloaded by a communication network from a server computer.

In addition, it should be clear that an operating system etc. operating on a computer can be made to complete part or all of the actual operations not just by executing program code read by the computer but also by way of commands based on the program code, so as to realize the function of any one of the above embodiments.

In addition, it is understandable that the program code read from the storage medium is written into a memory provided in an expansion board in a computer, or written into a memory provided in an expansion unit connected to the computer, and then based on the commands of the program code, a CPU etc. installed on the expansion board or expansion unit is made to perform part of all of the actual operations, so as to realize the function of any one of the above embodiments.

## Claims

1. A method for selecting an antenna in a wireless communication system comprising a first device having at least two wireless transceiving links ($503_{1-n}$), and each wireless transceiving link (503) having an antenna, wherein the antenna selection method comprises:

    obtaining a first reception quality value of each antenna and/or at least one antenna combination for a signal transmitted by a second device;
    **characterized by**
    on the basis of a maximum permissible transmission power and the first reception quality value of said each antenna and/or the antenna combination, estimating a second reception quality value of the second device for a signal transmitted by said each antenna and/or the antenna combination; and
    on the basis of the second reception quality value, determining an antenna or antenna combination as a transmitting antenna to be used when transmitting a signal to the second device.

2. The method as claimed in claim 1, **characterized in that** the step of obtaining a first reception quality value of each antenna and/or at least one antenna combination for a signal transmitted by a second device comprises:

    the first device measuring the signal-to-noise ratio or signal strength of a signal received by said each antenna from the second device, and
    obtaining a first reception quality value of said each antenna on the basis of the signal-to-noise ratio or signal strength.

3. The method as claimed in claim 1, **characterized in that** it further comprises:

    the first device using the antenna gain of said each antenna to calculate the maximum permissible transmission power or
    the first device using the antenna gain of said each antenna and the link loss and/or connector loss of said each wireless transceiving link (503) and antenna thereof to calculate the maximum permissible transmission power of said each antenna, wherein the method comprises in particular:the first device calculating the maximum value of antenna gain of the antenna combination on the basis of the antenna gain of said each antenna, and calculating the maximum permissible transmission power of the antenna combination on the basis of the maximum value of antenna gain of the antenna combination or the first device obtaining the antenna gain, link loss and connector loss from configuration information inputted by a user or a factory configuration parameter set of the first device.

4. The method as claimed in claim 1, **characterized in that** it further comprises:

the first device selecting the at least one antenna combination from preset alternative antenna combinations; or
the first device determining the at least one antenna combination on the basis of the first reception quality value of said each antenna, which in particular comprisesselecting a preset number of antennas from the various antennas according to the order of the first reception quality values from high to low, or selecting antennas for which the first reception quality value is greater than a preset threshold from the at least two antennas; using the selected antennas to obtain the at least one antenna combination.

5. The method as claimed in claim 1, **characterized in that** the step of determining an antenna or antenna combination as a transmitting antenna to be used when transmitting a signal to the second device on the basis of the second reception quality value comprises one or more of the following:

selecting the antenna or antenna combination with the greatest second reception quality value as the transmitting antenna ;
and/or,
when the second reception quality values of the various antennas are arranged in order from high to low, if the greatest difference value between the first N second reception quality values is less than a preset first threshold, when the equivalent isotropically radiated power (EIRP) of the maximum permissible transmission power of the antenna with the greatest second reception quality value is equal to the maximum legal EIRP, the antenna with the greatest second reception quality value is selected as the transmitting antenna; when the maximum permissible transmission power of the antenna with the greatest second reception quality value is the maximum transmission power permitted by the hardware, a combination of at least two of the N antennas with the first N second reception quality values is selected as an alternative antenna combination, a second reception quality value of the alternative antenna
combination is calculated, and on the basis of the second reception quality value of the alternative antenna combination and the second reception quality values of the various antennas, an antenna or antenna combination is selected as the transmitting antenna, wherein
N is an integer;
and/or,
when the antenna combination or the alternative antenna combination has the greatest second reception quality value, if the difference between said greatest second reception quality value and the greatest second reception quality value of the single antennas forming the antenna combination or the alternative antenna combination is less than a preset second threshold, the single antenna with the greatest second reception quality value in the antenna combination is selected as the transmitting antenna; if the difference between said greatest second reception quality value and the greatest second reception quality value of the single antennas forming the antenna combination or the alternative antenna combination is greater than a preset third threshold, the single antenna with the greatest second reception quality value in the antenna combination is selected as the transmitting antenna.

6. The method as claimed in claim 1, **characterized in that** the step of obtaining a first reception quality value of each antenna and/or at least one antenna combination for a signal transmitted by a second device comprises:

measuring an effective load packet and/or acknowledgement packet received from the second device in order to obtain the first reception quality value.

7. The method as claimed in claim 1, **characterized in that** when a preset condition is satisfied or a preset length of time has elapsed since the last time the transmitting antenna was determined, the antenna selection method is started to redetermine the transmitting antenna to be used when transmitting a signal to the second device.

8. The method as claimed in claim 1 or 7, **characterized in that** the step of obtaining a first reception quality value of each antenna and/or at least one antenna combination for a signal transmitted by a second device comprises:

   sending an empty packet to the second device, and measuring an acknowledgement packet fed back by the second device to obtain the first reception quality value.

9. A wireless communication device which has at least two wireless transceiving links ($503_{1-n}$), each wireless transceiving link (503) having an antenna, comprising:

   an information acquisition module (501), for obtaining a first reception quality value of each antenna and/or at least one antenna combination for a signal transmitted by a second device,
   **characterized by**
   on the basis of a maximum permissible transmission power and the first reception quality value of said each antenna and/or the antenna combination, estimating a second reception quality value of the second device for a signal transmitted by said each antenna and/or the antenna combination; and
   further **characterized by**
   an antenna selection module (502), for determining, on the basis of the second reception quality value, an antenna or antenna combination as a transmitting antenna to be used when transmitting a signal to the second device, wherein the information acquisition module (501) is used in particular for: measuring the signal-to-noise ratio or signal strength of a signal received by said each antenna from the second device, and obtaining a first reception quality value of said each antenna on the basis of the signal-to-noise ratio or signal strength or wherein the information acquisition module (501) is further used in particular for: using the antenna gain of said each antenna to calculate the maximum permissible transmission power or wherein the information acquisition module (501) is further used for:

   using the antenna gain of said each antenna and the link loss and/or connector loss of said each wireless transceiving link (503) and antenna thereof to calculate the maximum permissible transmission power of said each antenna.

10. The device as claimed in claim 9, **characterized in that** the information acquisition module (501) is further used for:

    calculating the maximum value of antenna gain of the antenna combination on the basis of the antenna gain of said each antenna, and calculating the maximum permissible transmission power of the antenna combination on the basis of the maximum value of antenna gain of the antenna combination.

11. The device as claimed in claim 9, **characterized in that** the information acquisition module (501) is used for:

    obtaining the antenna gain, link loss and connector loss from configuration information inputted by a user or a factory configuration parameter set of the first device.

12. The device as claimed in claim 9, **characterized in that** the information acquisition module (501) is used for: selecting the at least one antenna combination from preset alternative antenna combinations, or determining the at least one antenna combination on the basis of the first reception quality value of said each antenna wherein the information acquisition module (501) is used in particular for: selecting a preset number of antennas from the various antennas according to the order of the first reception quality values from high to low, or selecting antennas for which the first reception quality value is greater than a preset threshold from the at least two antennas; and using the selected antennas to obtain the at least one antenna combination.

13. The device as claimed in claim 9, **characterized in that** the antenna selection module (502) is used to perform one or more of the following:

    selecting the antenna or antenna combination with the greatest second reception quality value as the transmitting antenna ;
    and/or,
    when the second reception quality values of the various antennas are arranged in order from high to low, if the greatest difference value between the first N second reception quality values is less than a preset first threshold, when the equivalent isotropically radiated power (EIRP) of the maximum permissible transmission power of the antenna with the greatest second reception quality value is equal to the maximum legal EIRP, the antenna with the greatest second reception quality value is selected as the transmitting antenna; when the maximum permissible transmission power of the antenna with the greatest second reception quality value is the maximum transmission power permitted by the hardware, a combination of at least two of the N antennas with the first N second reception quality values is selected as an alternative antenna combination, a second reception quality value of the alternative antenna combination is calculated, and on the basis of the second reception quality value of the alternative antenna combination and the second reception quality values of the various antennas, an antenna or antenna combination is selected as the transmitting antenna, wherein N is an integer;

and/or,

when the antenna combination or the alternative antenna combination has the greatest second reception quality value, if the difference between said greatest second reception quality value and the greatest second reception quality value of the single antennas forming the antenna combination or the alternative antenna combination is less than a preset second threshold, the single antenna with the greatest second reception quality value in the antenna combination is selected as the transmitting antenna; if the difference between said greatest second reception quality value and the greatest second reception quality value of the single antennas forming the antenna combination or the alternative antenna combination is greater than a preset third threshold, the single antenna with the greatest second reception quality value in the antenna combination is selected as the transmitting antenna.

14. The device as claimed in claim 9, **characterized in that** the information acquisition module (502) is used for: measuring an effective load packet and/or acknowledgement packet received from the second device in order to obtain the first reception quality value or wherein the antenna selection module (502) is used for: starting the antenna selection method, when a preset condition is satisfied or a preset length of time has elapsed since the last time the transmitting antenna was determined, to re-determine the transmitting antenna to be used when transmitting a signal to the second device.

15. The device as claimed in claim 9 or 14, **characterized in that** the information acquisition module (502) is used for: sending an empty packet to the second device, and measuring an acknowledgement packet fed back by the second device to obtain the first reception quality value.

**Patentansprüche**

1. Verfahren zum Auswählen einer Antenne in einem drahtlosen Kommunikationssystem, umfassend eine erste Vorrichtung, die mindestens zwei drahtlose Sende-/Empfangsverbindungen ($503_{1-n}$) aufweist, und wobei jede drahtlose Sende-/Empfangsverbindung (503) eine Antenne aufweist, wobei das Antennenauswahlverfahren umfasst:

Erlangen eines ersten Empfangsqualitätswerts jeder Antenne und/oder mindestens einer Antennenkombination für ein von einer zweiten Vorrichtung übertragenes Signal;
**gekennzeichnet durch**
auf der Basis einer maximal zulässigen Übertragungsleistung und des ersten Empfangsqualitätswerts jeder der Antennen und/oder der Antennenkombination, Schätzen eines zweiten Empfangsqualitätswerts der zweiten Vorrichtung für ein von jeder der Antennen und/oder der Antennenkombination übertragenes Signal; und
auf der Basis des zweiten Empfangsqualitätswerts, Bestimmen einer Antenne oder Antennenkombination als eine Übertragungsantenne, die zu verwenden ist, wenn ein Signal an die zweite Vorrichtung übertragen wird.

2. Verfahren nach Anspruch 1, **dadurch gekennzeichnet, dass** der Schritt des Erlangens eines ersten Empfangsqualitätswerts jeder Antenne und/oder mindestens einer Antennenkombination für ein von einer zweiten Vorrichtung übertragenes Signal umfasst:

Messen, durch die erste Vorrichtung, des Störspannungsabstands oder der Signalstärke eines von jeder der Antennen von der zweiten Vorrichtung empfangenen Signals, und
Erlangen eines ersten Empfangsqualitätswerts jeder der Antennen auf der Basis des Störspannungsabstands oder der Signalstärke.

3. Verfahren nach Anspruch 1, **dadurch gekennzeichnet, dass** es ferner umfasst:

Verwenden, durch die erste Vorrichtung, der Antennenverstärkung jeder der Antennen zum Berechnen der maximal zulässigen Übertragungsleistung oder

Verwenden, durch die erste Vorrichtung, der Antennenverstärkung jeder der Antennen und des Verbindungsverlusts und/oder des Steckerverlusts jeder der drahtlosen Sende-/Empfangsverbindungen (503) und der Antenne davon zum Berechnen der maximal zulässigen Übertragungsleistung jeder der Antennen, wobei das Verfahren insbesondere umfasst:

Berechnen, durch die erste Vorrichtung, des maximalen Werts der Antennenverstärkung der Antennenkombination auf der Basis der Antennenverstärkung jeder der Antennen und Berechnen der maximal zulässigen Übertragungsleistung der Antennenkombination auf der Basis des maximalen Werts der Antennenverstärkung der Antennenkombination oder Erlangen, durch die erste Vorrichtung, der Antennenverstärkung, des Verbindungsverlusts und des Steckerverlusts aus Konfigurationsinformationen, die von einem Benutzer eingegeben wurden, oder aus einem Werkskonfiguration-Parametersatz der ersten Vorrichtung.

4.  Verfahren nach Anspruch 1, **dadurch gekennzeichnet, dass** es ferner umfasst:

Auswählen, durch die erste Vorrichtung, der mindestens einen Antennenkombination aus voreingestellten alternativen Antennenkombinationen;
oder
Bestimmen, durch die erste Vorrichtung, der mindestens einen Antennenkombination auf der Basis des ersten Empfangsqualitätswerts jeder der Antennen, was insbesondere Auswählen einer voreingestellten Anzahl von Antennen aus den verschiedenen Antennen gemäß der Reihenfolge der ersten Empfangsqualitätswerte von hoch zu niedrig oder Auswählen von Antennen, für die der erste Empfangsqualitätswert größer ist als ein voreingestellter Schwellenwert, aus den mindestens zwei Antennen umfasst;
Verwenden der ausgewählten Antennen zum Erlangen der mindestens einen Antennenkombination.

5.  Verfahren nach Anspruch 1, **dadurch gekennzeichnet, dass** der Schritt des Bestimmens einer Antenne oder Antennenkombination als eine Übertragungsantenne, die zu verwenden ist, wenn Übertragen eines Signals an die zweite Vorrichtung auf der Basis des zweiten Empfangsqualitätswerte eines oder mehr des Folgenden umfasst:

Auswählen der Antenne oder Antennenkombination mit dem größten zweiten Empfangsqualitätswert als die Übertragungsantenne;
und/oder
wenn die zweiten Empfangsqualitätswerte der verschiedenen Antennen der Reihe nach von hoch zu niedrig angeordnet sind, falls der größte Differenzwert zwischen den ersten N zweiten Empfangsqualitätswerten kleiner ist als ein voreingestellter erster Schwellenwert, wenn die äquivalente isotropische Strahlungsleistung (EIRP) der maximal zulässigen Übertragungsleistung der Antenne mit dem größten zweiten Empfangsqualitätswert gleich der maximalen legalen EIRP ist, wird die Antenne mit dem größten zweiten Empfangsqualitätswert als die Übertragungsantenne ausgewählt; wenn die maximal zulässige Übertragungsleistung der Antenne mit dem größten zweiten Empfangsqualitätswert die von der Hardware gestattete maximale Übertragungsleistung ist, wird eine Kombination von mindestens zwei der N Antennen mit den ersten N zweiten Empfangsqualitätswerten als eine alternative Antennenkombination ausgewählt, ein zweiter Empfangsqualitätswert der alternativen Antennenkombination berechnet und wird auf der Basis des zweiten Empfangsqualitätswerts der alternativen Antennenkombination und der zweiten Empfangsqualitätswerte der verschiedenen Antennen eine Antenne oder Antennenkombination als die Übertragungsantenne ausgewählt, wobei N eine ganze Zahl ist;
und/oder
wenn die Antennenkombination oder die alternative Antennenkombination den größten zweiten Empfangsqualitätswert aufweist, falls die Differenz zwischen dem größten zweiten Empfangsqualitätswert und dem größten zweiten Empfangsqualitätswert der einzelnen Antennen, die die Antennenkombination oder die alternative Antennenkombination bilden, kleiner ist als ein voreingestellter zweiter Schwellenwert, wird die einzelne Antenne mit dem größten zweiten Empfangsqualitätswert in der Antennenkombination als die Übertragungsantenne ausgewählt; falls die Differenz zwischen dem größten zweiten Empfangsqualitätswert und dem größten zweiten Empfangsqualitätswert der einzelnen Antennen, die die Antennenkombination oder die alternative Antennenkombination bilden, größer ist als ein voreingestellter dritter Schwellenwert, wird die einzelne Antenne mit dem größten zweiten Empfangsqualitätswert in der Antennenkombination als die Übertragungsantenne ausgewählt.

6.  Verfahren nach Anspruch 1, **dadurch gekennzeichnet, dass** der Schritt des Erlangens eines ersten Empfangsqualitätswerts jeder Antenne und/oder mindestens einer Antennenkombination für ein von einer zweiten Vorrichtung übertragenes Signal umfasst:

Messen eines Nutzlastpakets und/oder Bestätigungspakets, empfangen von der zweiten Vorrichtung, um den ersten Empfangsqualitätswert zu erlangen.

**7.** Verfahren nach Anspruch 1, **dadurch gekennzeichnet, dass**, wenn eine voreingestellte Bedingung erfüllt wird oder eine voreingestellte Zeitdauer seit der letztmaligen Bestimmung der Übertragungsantenne verstrichen ist, das Antennenauswahlverfahren gestartet wird, um die Übertragungsantenne, die beim Übertragen eines Signals an die zweite Vorrichtung zu verwenden ist, neu zu bestimmen.

**8.** Verfahren nach Anspruch 1 oder 7, **dadurch gekennzeichnet, dass** der Schritt des Erlangens eines ersten Empfangsqualitätswerts jeder Antenne und/oder mindestens einer Antennenkombination für ein von einer zweiten Vorrichtung übertragenes Signal umfasst:

Senden eines leeren Pakets an die zweite Vorrichtung und Messen eines von der zweiten Vorrichtung rückgeführten Bestätigungspakets, um den ersten Empfangsqualitätswert zu erlangen.

**9.** Drahtlose Kommunikationsvorrichtung, die mindestens zwei drahtlose Sende-/Empfangsverbindungen ($503_{1-n}$) aufweist, wobei jede drahtlose Sende-/Empfangsverbindung (503) eine Antenne aufweist, umfassend:

ein Informationserfassungsmodul (501) zum Erlangen eines ersten Empfangsqualitätswerts jeder Antenne und/oder mindestens einer Antennenkombination für ein von einer zweiten Vorrichtung übertragenes Signal; **gekennzeichnet durch**
auf der Basis einer maximal zulässigen Übertragungsleistung und des ersten Empfangsqualitätswerts jeder der Antennen und/oder der Antennenkombination, Schätzen eines zweiten Empfangsqualitätswerts der zweiten Vorrichtung für ein von jeder der Antennen und/oder der Antennenkombination übertragenes Signal; und ferner **gekennzeichnet durch**
ein Antennenauswahlmodul (502) zum Bestimmen, auf der Basis des zweiten Empfangsqualitätswerts, einer Antenne oder Antennenkombination als eine Übertragungsantenne, die zu verwenden ist, wenn ein Signal an die zweite Vorrichtung übertragen wird, wobei das Informationserfassungsmodul (501) insbesondere verwendet wird zum: Messen des Störspannungsabstands oder der Signalstärke eines von jeder der Antennen von der zweiten Vorrichtung empfangenen Signals und Erlangen eines ersten Empfangsqualitätswerts jeder der Antennen auf der Basis des Störspannungsabstands oder der Signalstärke oder wobei das Informationserfassungsmodul (501) ferner insbesondere verwendet wird zum: Verwenden der Antennenverstärkung jeder der Antennen zum Berechnen der maximal zulässigen Übertragungsleistung oder wobei das Informationserfassungsmodul (501) ferner verwendet wird zum:

Verwenden der Antennenverstärkung jeder der Antennen und des Verbindungsverlusts und/oder des Steckerverlusts jeder der drahtlosen Sende-/Empfangsverbindungen (503) und der Antenne davon zum Berechnen der maximal zulässigen Übertragungsleistung jeder der Antennen.

**10.** Vorrichtung nach Anspruch 9, **dadurch gekennzeichnet, dass** das Informationserfassungsmodul (501) ferner verwendet wird zum:

Berechnen des maximalen Werts der Antennenverstärkung der Antennenkombination auf der Basis der Antennenverstärkung jeder der Antennen und Berechnen der maximal zulässigen Übertragungsleistung der Antennenkombination auf der Basis des maximalen Werts der Antennenverstärkung der Antennenkombination.

**11.** Vorrichtung nach Anspruch 9, **dadurch gekennzeichnet, dass** das Informationserfassungsmodul (501) verwendet wird zum:

Erlangen der Antennenverstärkung, des Verbindungsverlusts und des Steckerverlusts aus Konfigurationsinformationen, die von einem Benutzer eingegeben wurden, oder aus einem Werkskonfiguration-Parametersatz der ersten Vorrichtung.

**12.** Vorrichtung nach Anspruch 9, **dadurch gekennzeichnet, dass** das Informationserfassungsmodul (501) verwendet wird zum:

Auswählen der mindestens einen Antennenkombination aus voreingestellten alternativen Antennenkombinationen oder Bestimmen der mindestens einen Antennenkombination auf der Basis des ersten Empfangsqualitätswerts jeder der Antennen, wobei das Informationserfassungsmodul (501) insbesondere verwendet wird zum: Auswählen einer voreingestellten Anzahl von Antennen aus den verschiedenen Antennen gemäß der Reihenfolge der ersten Empfangsqualitätswerte von hoch zu niedrig oder Auswählen von Antennen, für die der erste Empfangsqualitätswert größer ist als ein voreingestellter Schwellenwert, aus den mindestens zwei Antennen; und Verwenden der ausgewählten Antennen zum Erlangen der mindestens einen Antennenkombination.

**13.** Vorrichtung nach Anspruch 9, **dadurch gekennzeichnet, dass** das Antennenauswahlmodul (502) zum Durchführen von einem oder mehr des Folgenden verwendet wird:

Auswählen der Antenne oder Antennenkombination mit dem größten zweiten Empfangsqualitätswert als die Übertragungsantenne;
und/oder
wenn die zweiten Empfangsqualitätswerte der verschiedenen Antennen der Reihe nach von hoch zu niedrig angeordnet sind, falls der größte Differenzwert zwischen den ersten N zweiten Empfangsqualitätswerten kleiner ist als ein voreingestellter erster Schwellenwert, wenn die äquivalente isotropische Strahlungsleistung (EIRP) der maximal zulässigen Übertragungsleistung der Antenne mit dem größten zweiten Empfangsqualitätswert gleich der maximalen legalen EIRP ist, wird die Antenne mit dem größten zweiten Empfangsqualitätswert als die Übertragungsantenne ausgewählt; wenn die maximal zulässige Übertragungsleistung der Antenne mit dem größten zweiten Empfangsqualitätswert die von der Hardware gestattete maximale Übertragungsleistung ist, wird eine Kombination von mindestens zwei der N Antennen mit den ersten N zweiten Empfangsqualitätswerten als eine alternative Antennenkombination ausgewählt, ein zweiter Empfangsqualitätswert der alternativen Antennenkombination berechnet und wird auf der Basis des zweiten Empfangsqualitätswerts der alternativen Antennenkombination und der zweiten Empfangsqualitätswerte der verschiedenen Antennen eine Antenne oder Antennenkombination als die Übertragungsantenne ausgewählt, wobei N eine ganze Zahl ist;
und/oder
wenn die Antennenkombination oder die alternative Antennenkombination den größten zweiten Empfangsqualitätswert aufweist, falls die Differenz zwischen dem größten zweiten Empfangsqualitätswert und dem größten zweiten Empfangsqualitätswert der einzelnen Antennen, die die Antennenkombination oder die alternative Antennenkombination bilden, kleiner ist als ein voreingestellter zweiter Schwellenwert, wird die einzelne Antenne mit dem größten zweiten Empfangsqualitätswert in der Antennenkombination als die Übertragungsantenne ausgewählt; falls die Differenz zwischen dem größten zweiten Empfangsqualitätswert und dem größten zweiten Empfangsqualitätswert der einzelnen Antennen, die die Antennenkombination oder die alternative Antennenkombination bilden, größer ist als ein voreingestellter dritter Schwellenwert, wird die einzelne Antenne mit dem größten zweiten Empfangsqualitätswert in der Antennenkombination als die Übertragungsantenne ausgewählt.

**14.** Vorrichtung nach Anspruch 9, **dadurch gekennzeichnet, dass** das Informationserfassungsmodul (502) verwendet wird zum:

Messen eines Nutzlastpakets und/oder Bestätigungspakets, empfangen von der zweiten Vorrichtung, um den ersten Empfangsqualitätswert zu erlangen, oder wobei das Antennenauswahlmodul (502) verwendet wird zum: Starten des Antennenauswahlverfahrens, wenn eine voreingestellte Bedingung erfüllt wird oder eine voreingestellte Zeitdauer seit der letztmaligen Bestimmung der Übertragungsantenne verstrichen ist, um die Übertragungsantenne, die beim Übertragen eines Signals an die zweite Vorrichtung zu verwenden ist, neu zu bestimmen.

**15.** Vorrichtung nach Anspruch 9 oder 14, **dadurch gekennzeichnet, dass** das Informationserfassungsmodul (502) verwendet wird zum: Senden eines leeren Pakets an die zweite Vorrichtung und Messen eines von der zweiten Vorrichtung rückgeführten Bestätigungspakets, um den ersten Empfangsqualitätswert zu erlangen.

## Revendications

**1.** Procédé permettant de sélectionner une antenne dans un système de communication sans fil comprenant un premier dispositif ayant au moins deux liaisons d'émission/réception sans fil ($503_{1-n}$), et chaque liaison d'émission/réception sans fil (503) ayant une antenne, le procédé de sélection d'antenne comprenant les étapes suivantes :

obtenir une première valeur de qualité de réception de chaque antenne et/ou d'au moins une combinaison d'antennes pour un signal transmis par un deuxième dispositif ;

**caractérisé par**

sur la base d'une puissance de transmission admissible maximum et de la première valeur de qualité de réception de ladite chaque antenne et/ou de ladite combinaison d'antennes, estimer une deuxième valeur de qualité de réception du deuxième dispositif pour un signal transmis par ladite chaque antenne et/ou ladite combinaison d'antennes ; et

sur la base de la deuxième valeur de qualité de réception, déterminer une antenne ou une combinaison d'antennes comme une antenne de transmission à utiliser lors de la transmission d'un signal au deuxième dispositif.

2. Procédé selon la revendication 1, **caractérisé en ce que** l'étape consistant à obtenir une première valeur de qualité de réception de chaque antenne et/ou d'au moins une combinaison d'antennes pour un signal transmis par un deuxième dispositif comprend :

mesurer, par le premier dispositif, le rapport signal/bruit ou l'intensité de signal d'un signal reçu par ladite chaque antenne à partir du deuxième dispositif, et

obtenir une première valeur de qualité de réception de ladite chaque antenne sur la base du rapport signal/bruit ou de l'intensité de signal.

3. Procédé selon la revendication 1, **caractérisé en ce qu'**il comprend en outre :

utiliser, par le premier dispositif, le gain d'antenne de ladite chaque antenne pour calculer la puissance de transmission admissible maximum ou

utiliser, par le premier dispositif, le gain d'antenne de ladite chaque antenne et la perte de liaison et/ou la perte de connecteur de ladite chaque liaison d'émission/réception sans fil (503) et de son antenne pour calculer la puissance de transmission admissible maximum de ladite chaque antenne, le procédé comprenant en particulier : calculer, par le premier dispositif, la valeur maximum de gain d'antenne de la combinaison d'antennes sur la base du gain d'antenne de ladite chaque antenne, et calculer la puissance de transmission admissible maximum de la combinaison d'antennes sur la base de la valeur maximum de gain d'antenne de la combinaison d'antennes ou obtenir, par le premier dispositif, le gain d'antenne, la perte de liaison et la perte de connecteur à partir d'informations de configuration entrées par un utilisateur ou d'un ensemble de paramètres de configuration usine du premier dispositif.

4. Procédé selon la revendication 1, **caractérisé en ce qu'**il comprend en outre :

sélectionner, par le premier dispositif, ladite combinaison d'antennes à partir de combinaisons d'antennes alternatives prédéfinies ;

ou

déterminer, par le premier dispositif, ladite combinaison d'antennes sur la base de la première valeur de qualité de réception de ladite chaque antenne, qui comprend en particulier : sélectionner un nombre prédéfini d'antennes à partir des diverses antennes selon l'ordre des premières valeurs de qualité de réception allant de élevé à faible, ou sélectionner des antennes pour lesquelles la première valeur de qualité de réception est supérieure à un seuil prédéfini à partir desdites deux antennes ;

utiliser les antennes sélectionnées pour obtenir ladite combinaison d'antennes.

5. Procédé selon la revendication 1, **caractérisé en ce que** l'étape consistant à déterminer une antenne ou une combinaison d'antennes comme une antenne de transmission à utiliser lors de la transmission d'un signal au deuxième dispositif sur la base de la deuxième valeur de qualité de réception comprend une ou plusieurs des actions suivantes :

sélectionner l'antenne ou la combinaison d'antennes avec la deuxième valeur de qualité de réception la plus élevée comme l'antenne de transmission ;

et/ou,

lorsque les deuxièmes valeurs de qualité de réception des diverses antennes sont arrangées dans un ordre allant de élevé à faible, si la plus grande valeur de différence entre les premières N deuxièmes valeurs de qualité de réception est inférieure à un premier seuil prédéfini, lorsque la puissance isotrope rayonnée équivalente (EIRP) de la puissance de transmission admissible maximum de l'antenne avec la deuxième valeur de qualité de réception la plus élevée est égale à l'EIRP légal maximum, l'antenne avec la deuxième valeur de qualité de réception la plus élevée est sélectionnée comme l'antenne de transmission ; lorsque la puissance de transmission admissible maximum de l'antenne avec la deuxième valeur de qualité de réception la plus élevée est la puissance de transmission maximum permise par le matériel, une combinaison d'au moins deux des N antennes avec les premières N deuxièmes valeurs de qualité de réception est sélectionnée comme une combinaison d'antennes alternative, une deuxième valeur de qualité de réception de la combinaison d'antennes alternative est calculée, et sur la base de la deuxième valeur de qualité de réception de la combinaison d'antennes alternative et des deuxièmes valeurs de qualité de réception des diverses antennes, une antenne ou une combinaison d'antennes est sélectionnée comme l'antenne de transmission, N étant un nombre entier ; et/ou,

lorsque la combinaison d'antennes ou la combinaison d'antennes alternative a la deuxième valeur de qualité de réception la plus élevée, si la différence entre ladite deuxième valeur de qualité de réception plus élevée et la deuxième valeur de qualité de réception la plus élevée des simples antennes formant la combinaison d'antennes ou la combinaison d'antennes alternative est inférieure à un deuxième seuil prédéfini, la simple antenne avec la deuxième valeur de qualité de réception la plus élevée dans la combinaison d'antennes est sélectionnée comme l'antenne de transmission ; si la différence entre ladite deuxième valeur de qualité de réception plus élevée et la deuxième valeur de qualité de réception la plus élevée des simples antennes formant la combinaison d'antenne ou la combinaison d'antennes alternative est supérieure à un troisième seuil prédéfini, la simple antenne avec la deuxième valeur de qualité de réception la plus élevée dans la combinaison d'antennes est sélectionnée comme l'antenne de transmission.

6. Procédé selon la revendication 1, **caractérisé en ce que** l'étape consistant à obtenir une première valeur de qualité de réception de chaque antenne et/ou d'au moins une combinaison d'antennes pour un signal transmis par un deuxième dispositif comprend :

   mesurer un paquet de charge effective et/ou un paquet d'accusé de réception reçu à partir du deuxième dispositif afin d'obtenir la première valeur de qualité de réception.

7. Procédé selon la revendication 1 **caractérisé en ce que**, lorsqu'une condition prédéfinie est satisfaite ou qu'une longueur de temps prédéfinie s'est écoulée depuis le dernier temps où l'antenne de transmission a été déterminée, le procédé de sélection d'antenne est démarré pour déterminer à nouveau l'antenne de transmission à utiliser lors de la transmission d'un signal au deuxième dispositif.

8. Procédé selon la revendication 1 ou 7, **caractérisé en ce que** l'étape consistant à obtenir une première valeur de qualité de réception de chaque antenne et/ou d'au moins une combinaison d'antennes pour un signal transmis par un deuxième dispositif comprend :

   envoyer un paquet vide au deuxième dispositif, et mesurer un paquet d'accusé de réception retourné par le deuxième dispositif pour obtenir la première valeur de qualité de réception.

9. Dispositif de communication sans fil qui a au moins deux liaisons d'émission/réception sans fil ($503_{1-n}$), chaque liaison d'émission/réception sans fil (503) ayant une antenne, comprenant :

   un module d'acquisition d'informations (501), destiné à obtenir une première valeur de qualité de réception de chaque antenne et/ou d'au moins une combinaison d'antennes pour un signal transmis par un deuxième dispositif,
   **caractérisé par**
   sur la base d'une puissance de transmission admissible maximum et de la première valeur de qualité de réception de ladite chaque antenne et/ou de ladite combinaison d'antennes, estimer une deuxième valeur de qualité de réception du deuxième dispositif pour un signal transmis par ladite chaque antenne et/ou ladite combinaison d'antennes ; et
   **caractérisé en outre par**
   un module de sélection d'antenne (502), destiné à déterminer, sur la base de la deuxième valeur de qualité de réception, une antenne ou une combinaison d'antennes comme une antenne de transmission à utiliser lors de la transmission d'un signal au deuxième dispositif, le module d'acquisition d'informations (501) étant utilisé en particulier pour :

   mesurer le rapport signal/bruit ou l'intensité de signal d'un signal reçu par ladite chaque antenne à partir du deuxième dispositif, et obtenir une première valeur de qualité de réception de ladite chaque antenne sur la base du rapport signal/bruit ou de l'intensité de signal ou le module d'acquisition d'informations (501) étant en outre utilisé en particulier pour : utiliser le gain d'antenne de ladite chaque antenne pour calculer la puissance de transmission admissible maximum ou

le module d'acquisition d'informations (501) étant en outre utilisé pour :

utiliser le gain d'antenne de ladite chaque antenne et la perte de liaison et/ou la perte de connecteur de ladite chaque liaison d'émission/réception sans fil (503) et de son antenne pour calculer la puissance de transmission admissible maximum de ladite chaque antenne.

**10.** Dispositif selon la revendication 9, **caractérisé en ce que** le module d'acquisition d'informations (501) est en outre utilisé pour :

calculer la valeur maximum de gain d'antenne de la combinaison d'antennes sur la base du gain d'antenne de ladite chaque antenne, et calculer la puissance de transmission admissible maximum de la combinaison d'antennes sur la base de la valeur maximum de gain d'antenne de la combinaison d'antennes.

**11.** Dispositif selon la revendication 9, **caractérisé en ce que** le module d'acquisition d'informations (501) est utilisé pour :

obtenir le gain d'antenne, la perte de liaison et la perte de connecteur à partir d'informations de configuration entrées par un utilisateur ou d'un ensemble de paramètres de configuration usine du premier dispositif.

**12.** Dispositif selon la revendication 9, **caractérisé en ce que** le module d'acquisition d'informations (501) est utilisé pour :

sélectionner la au moins une combinaison d'antennes à partir de combinaisons d'antennes alternatives prédéfinies, ou déterminer la au moins une combinaison d'antennes sur la base de la première valeur de qualité de réception de ladite chaque antenne, le module d'acquisition d'informations (501) étant utilisé en particulier pour : sélectionner un nombre prédéfini d'antennes à partir des diverses antennes selon l'ordre des premières valeurs de qualité de réception allant de élevé à faible, ou sélectionner des antennes pour lesquelles la première valeur de qualité de réception est supérieure à un seuil prédéfini à partir des au moins deux antennes ; et utiliser les antennes sélectionnées pour obtenir la au moins une combinaison d'antennes.

**13.** Dispositif selon la revendication 9, **caractérisé en ce que** le module de sélection d'antenne (502) est utilisé pour exécuter une ou plusieurs des actions suivantes :

sélectionner l'antenne ou la combinaison d'antennes avec la deuxième valeur de qualité de réception la plus élevée comme l'antenne de transmission ;
et/ou,
lorsque les deuxièmes valeurs de qualité de réception des diverses antennes sont arrangées dans un ordre allant de élevé à faible, si la plus grande valeur de différence entre les premières N deuxièmes valeurs de qualité de réception est inférieure à un premier seuil prédéfini, lorsque la puissance isotrope rayonnée équivalente (EIRP) de la puissance de transmission admissible maximum de l'antenne avec la deuxième valeur de qualité de réception la plus élevée est égale à l'EIRP légal maximum, l'antenne avec la deuxième valeur de qualité de réception la plus élevée est sélectionnée comme l'antenne de transmission ; lorsque la puissance de transmission admissible maximum de l'antenne avec la deuxième valeur de qualité de réception la plus élevée est la puissance de transmission maximum permise par le matériel, une combinaison d'au moins deux des N antennes avec les premières N deuxièmes valeurs de qualité de réception est sélectionnée comme une combinaison d'antennes alternative, une deuxième valeur de qualité de réception de la combinaison d'antennes alternative est calculée, et sur la base de la deuxième valeur de qualité de réception de la combinaison d'antennes alternative et des deuxièmes valeurs de qualité de réception des diverses antennes, une antenne ou une combinaison d'antennes est sélectionnée comme l'antenne de transmission, N étant un nombre entier ;
et/ou,
lorsque la combinaison d'antennes ou la combinaison d'antennes alternative a la deuxième valeur de qualité de réception la plus élevée, si la différence entre ladite deuxième valeur de qualité de réception plus élevée et la deuxième valeur de qualité de réception la plus élevée des simples antennes formant la combinaison d'antennes ou la combinaison d'antennes alternative est inférieure à un deuxième seuil prédéfini, la simple antenne avec la deuxième valeur de qualité de réception la plus élevée dans la combinaison d'antennes est sélectionnée comme l'antenne de transmission ; si la différence entre ladite deuxième valeur de qualité de réception la plus élevée et la deuxième valeur de qualité de réception la plus élevée des simples antennes formant la combinaison d'antennes ou la combinaison d'antennes alternative est supérieure à un troisième seuil prédéfini, la simple antenne avec la deuxième valeur de qualité de réception la plus élevée dans la combinaison d'antennes est sélectionnée comme l'antenne de transmission.

14. Dispositif selon la revendication 9, **caractérisé en ce que** le module d'acquisition d'informations (502) est utilisé pour :

mesurer un paquet de charge effective et/ou un paquet d'accusé de réception reçu à partir du deuxième dispositif afin d'obtenir la première valeur de qualité de réception ou le module de sélection d'antenne (502) étant utilisé pour :

démarrer le procédé de sélection d'antenne, lorsqu'une condition prédéfinie est satisfaite ou qu'une longueur de temps prédéfinie s'est écoulée depuis le dernier temps où l'antenne de transmission a été déterminée, pour déterminer à nouveau l'antenne de transmission à utiliser lors de la transmission d'un signal au deuxième dispositif.

15. Dispositif selon la revendication 9 ou 14, **caractérisé en ce que** le module d'acquisition d'informations (502) est utilisé pour : envoyer un paquet vide au deuxième dispositif, et mesurer un paquet d'accusé de réception retourné par le deuxième dispositif pour obtenir la première valeur de qualité de réception.

# FIG 1

101

obtaining a first reception quality value of each antenna and/or at least one antenna combination for a signal transmitted by second device

102

on the basis of a maximum permissible transmission power and the first reception quality value of said each antenna and/or the antenna combination, estimating a second reception quality value of the second device for a signal transmitted by said each antenna and/or the antenna combination

on the basis of the second reception quality value, determining an antenna or antenna combination as a transmitting antenna to be used when transmitting a signal to the second device.

103

# FIG 2

201

measuring, as a first reception quality value,
a received signal strength of each antenna for a signal transmitted
by the second device

202

obtaining the antenna gain of each antenna
from configuration information

203

calculating the permissible transmission power of each antenna

204

estimating a second reception quality value of the second
device for a signal transmitted by each antenna.

205

selecting the antenna with the greatest second reception
quality value as the transmitting antenna to be used when
transmitting a signal to the second device.

# FIG 3

301

obtaining a first reception quality value of each antenna and
at least one antenna comination for a signal
transmitted by the second device

302

obtaining the antenna gain of each antenna,
and calculating the antenna gain of the antenna combination

303

calculating the maximum permissible transmission power of each antenna
and antenna combination on the basis of the antenna gain
obtained for each antenna and antenna combination

304

on the basis of the maximum permissible transmission power and the first
reception quality value of said each antenna and/or the antenna combination,
estimating a second reception quality value of the second device for a signal
transmitted by said each antenna and/or the antenna combination

305

on the basis of the second reception quality value, determining an antenna
or antenna combination as a transmitting antenna to be used when
transmitting a signal to the second device

# FIG 4

401

obtaining a first reception quality value of each antenna and/or at least one antenna combination for a signal transmitted by the second device

402

estimating a second reception quality value of the second device for a signal transmitted by said each antenna and/or the antenna combination, on the basis of a maximum permissible transmission power and the first reception quality value of said each antenna and/or the antenna combination

403

determining an antenna or antenna combination as a transmitting antenna to be used when transmitting a signal to the second device, on the basis of the second reception quality value.

404

Is a preset restart condition satisfied?

Yes

No

FIG 5

wireless transceiving module

5031

wireless transceiving module

503n

· · · · · ·

Internal bus

information acquisition module

501

antenna selection module

502

CPU

Memory

## FIG 6

$$RSSI_{AP,1} = G_{AP,1} \cdot a_1 \cdot P_{UE} \cdot G_{UE}$$

$$RSSI_{AP,2} = G_{AP,2} \cdot a_2 \cdot P_{UE} \cdot G_{UE}$$

$$RSSI_{AP,3} = G_{AP,3} \cdot a_3 \cdot P_{UE} \cdot G_{UE}$$

## FIG 7

$$RSSI_{UE,1} = P_{AP,1} \cdot G_{AP,1} \cdot a_1 \cdot G_{UE}$$

$$RSSI_{UE,2} = P_{AP,2} \cdot G_{AP,2} \cdot a_2 \cdot G_{UE}$$

$$RSSI_{UE,3} = P_{AP,3} \cdot G_{AP,3} \cdot a_3 \cdot G_{UE}$$

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005185707 A1